# EUROPEAN PATENT APPLICATION

(11) **EP 4 418 594 A1**
(43) Date of publication of application: **21.08.2024**
(21) Application number: 24155891.5
(22) Date of filing: 06.02.2024
(51) Int. Cl.: H04L 5/00, H04W 76/14, H04W 92/18

(54) **SIDELINK POSITIONING ENHANCEMENTS**

(30) Priority: 14.02.2023 FI 20235150
(71) Applicant: Nokia Technologies Oy, 02610 Espoo (FI)
(72) Inventor: KEATING, Ryan, Chicago (US); CHA, Hyun-Su, Chicago (US)
(74) Representative: Nokia EPO representatives

(57) **Abstract**

Embodiments of the present disclosure relate to devices, methods, apparatuses, and computer readable storage media of sidelink positioning enhancements. An apparatus selects, from a resource pool, a part of a slot in time domain for communication of a sidelink reference signal. The apparatus generates sidelink control information (SCI) comprising an indication of the part of the slot. The apparatus then transmits the SCI to a terminal device. By efficient usage of SCI, the resource allocation at sub-slot level can be enabled for sidelink positioning. In this way, sidelink positioning sensing is improved in term of resource reservation. In addition, the sidelink positioning reference signal interference can be reduced.

## Description

### FIELDS

Various example embodiments of the present disclosure generally relate to the field of telecommunication, and in particular, to methods, devices, apparatuses and computer readable storage medium for sidelink positioning enhancements.

### BACKGROUND

In 5G NR, reference signals, such as, positioning reference signal (PRS), sounding reference signal (SRS), etc., can be used for positioning UE. In an example scenario, UE needs to receive PRS from multiple other nodes and/or transmit PRS to multiple other nodes. These receptions or transmissions may happen simultaneously or nearly simultaneously, so that the location of UE can be determined with low latency and without movement of the nodes which may impact the location estimation. In Uu based positioning, for example in downlink time difference of arrival (DL-TDOA), this is achieved by having gNBs transmit DL PRS at one or more same symbols with comb offsets. Similar mechanisms are expected to be reused for sidelink (SL) positioning.

### SUMMARY

In a first aspect of the present disclosure, there is provided a first apparatus. The first apparatus comprises at least one processor; and at least one memory storing instructions that, when executed by the at least one processor, cause the first apparatus at least to: select, from a resource pool, a part of a slot in time domain for communication of a sidelink reference signal; generate sidelink control information, SCI, comprising an indication of the part of the slot; and transmit the SCI to a terminal device.

In a second aspect of the present disclosure, there is provided a second apparatus. The second apparatus comprises at least one processor; and at least one memory storing instructions that, when executed by the at least one processor, cause the second apparatus at least to: receive, from a terminal device, sidelink control information, SCI, comprising an indication of a part of a slot in time domain selected for communication of a sidelink reference signal; and determine, based on the indication, a potential communication of the sidelink reference signal on the part of the slot.

In a third aspect of the present disclosure, there is provided a method. The method comprises: selecting, at a first terminal device and from a resource pool, a part of a slot in time domain for communication of a sidelink reference signal; generating sidelink control information, SCI, comprising an indication of the part of the slot; and transmitting the SCI to a second terminal device.

In a fourth aspect of the present disclosure, there is provided a method. The method comprises: receiving, from a first terminal device, SCI comprising an indication of a part of a slot in time domain selected for communication of a sidelink reference signal; and determining, based on the indication, a potential communication of the sidelink reference signal on the part of the slot.

In a fifth aspect of the present disclosure, there is provided a first apparatus. The first apparatus comprises: means for selecting, from a resource pool, a part of a slot in time domain for communication of a sidelink reference signal; means for generating SCI comprising an indication of the part of the slot; and means for transmitting the SCI to a second apparatus.

In a sixth aspect of the present disclosure, there is provided a second apparatus. The second apparatus comprises: means for receiving, from a first apparatus, SCI comprising an indication of a part of a slot in time domain selected for communication of a sidelink reference signal; and means for determining, based on the indication, a potential communication of the sidelink reference signal on the part of the slot.

In a seventh aspect of the present disclosure, there is provided a computer readable medium. The computer readable medium comprises instructions stored thereon for causing an apparatus to perform at least the method according to the third aspect.

In an eighth aspect of the present disclosure, there is provided a computer readable medium. The computer readable medium comprises instructions stored thereon for causing an apparatus to perform at least the method according to the fourth aspect.

In a ninth aspect of the present disclosure, there is provided a computer program comprising instructions which, when executed by an apparatus, cause the apparatus to perform at least the method according to the third aspect.

In a tenth aspect of the present disclosure, there is provided a computer program comprising instructions which, when executed by an apparatus, cause the apparatus to perform at least the method according to the fourth aspect.

It is to be understood that the Summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, where:
FIG. 1 illustrates an example communication environment in which example embodiments of the present disclosure can be implemented;
FIG. 2 illustrates an example sub-slot resource allocation scheme according to some example embodiments of the present disclosure;
FIG. 3 illustrates an example signaling diagram of SL positioning procedure according to some example embodiments of the present disclosure;
FIG. 4 illustrates a flowchart of a method implemented at a terminal device according to some example embodiments of the present disclosure;
FIG. 5 illustrates a flowchart of a method implemented at a terminal device according to some example embodiments of the present disclosure;
FIG. 6 illustrates a simplified block diagram of a device that is suitable for implementing example embodiments of the present disclosure; and
FIG. 7 illustrates a block diagram of an example computer readable medium in accordance with some example embodiments of the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. Embodiments described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first," "second" and the like may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used herein, unless stated explicitly, performing a step "in response to A" does not indicate that the step is performed immediately after "A" occurs and one or more intervening steps may be included.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as 6G, New Radio (NR), Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), an NR NB (also referred to as a gNB), a Remote Radio Unit (RRU), a radio header (RH), a remote radio head (RRH), a relay, an Integrated Access and Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, radio access network (RAN) split architecture comprises a Centralized Unit (CU) and a Distributed Unit (DU) at an IAB donor node. An IAB node comprises a Mobile Terminal (IAB-MT) part that behaves like a UE toward the parent node, and a DU part of an IAB node behaves like a base station toward the next-hop IAB node.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the following description, the terms "terminal device", "communication device", "terminal", "user equipment" and "UE" may be used interchangeably.

As used herein, the term "resource," "transmission resource," "resource block," "physical resource block" (PRB), "uplink resource," or "downlink resource" may refer to any resource for performing a communication, for example, a communication between a terminal device and a network device, such as a resource in time domain, a resource in frequency domain, a resource in space domain, a resource in code domain, or any other resource enabling a communication, and the like. In the following, unless explicitly stated, a resource in both frequency domain and time domain will be used as an example of a transmission resource for describing some example embodiments of the present disclosure. It is noted that example embodiments of the present disclosure are equally applicable to other resources in other domains.

As used herein, the term "sub-slot" or "mini-slot" may refer to a time domain resource less than a full slot, in other words, which may be a part of a slot. It should be understood that this concept may encompass the equivalents with different names according to any suitable generation communication protocols and/or communication standards either currently known or to be developed in the future.

SL reference signal has been proposed for positioning purposes, such as SL positioning reference signal (SL-PRS). Resource reservation and scheduling may be one of the concerns in SL positioning. To this end, the comb structure may be adopted for SL-PRS in frequency domain, which allows a frequency-division multiplexing (FDM). Moreover, for resource allocation in time domain, one slot may be divided into smaller units as multiple SL-PRS resources. In this case, a part of a slot, which may be also called sub-slot(s), mini-slot(s), etc., is used for SL-PRS transmission, and accordingly, more than one SL-PRS can be transmitted in the same slot in a time-division multiplexing (TDM) method. In the context of the present disclosure, this may be also referred to as a sub-slot structure or a sub-slot allocation.

There are still problems to be discussed for implementation of sub-slot allocation. For example, how to indicate which sub-slot the SL PRS is located in. This may not be problematic for legacy UEs. Since legacy UEs are not able to understand the sub-slot structure, so they may simply assume that the SL-PRS will take up the full slot. However, for non-legacy UEs to receive the SL-PRS, they need to know in which sub-slot to find the SL PRS.

In order to solve the above issue as well as other potential issues, the present disclosure provides a SL positioning solution. In the solution, sub-slot allocation is used for SL reference signal transmission, and control information for SL communication is reused for providing an indication of part of the slot in which a SL reference signal is to be transmitted. Any UE that successfully decoded this indication is aware of which sub-slot will be used for a potential SL reference signal transmission. Furthermore, the sub-slots not indicated in the indication are considered as being available resources. In this way, SL positioning sensing is improved in terms of resource reservation, and the SL reference signal interferences can be reduced.

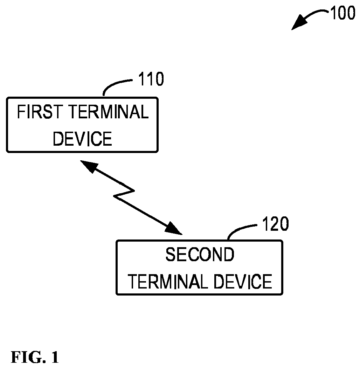

FIG. 1 illustrates an example communication environment 100 in which example embodiments of the present disclosure can be implemented. In the communication environment 100, a plurality of terminal devices, including a first terminal device 110 and a second terminal device 120, may communicate with each other. In some cases, the communication network 100 may also include a network device (not shown).

The communication between multiple terminal devices is referred to as SL communication. In some scenarios, the network device may be responsible for resource allocation of the SL transmission, which is called as resource allocation mode 1. For example, the network device may provide grants of SL resources to terminal devices for the sidelink communication. In some other scenarios, the terminal devices may autonomously select resources for their sidelink transmissions, which is called as resource allocation mode 2. In particular, a terminal device may perform a sending procedure over a configured sidelink transmission resource pool. The resource pool may be a dedicated resource pool, for example, only for SL-PRS, or a shared resource pool for both SL-PRS and data transmissions.

SL transmissions are communicated over a Physical Sidelink Control Channel (PSCCH) and a Physical Sidelink Shared Channel (PSSCH). The PSCCH carries SL control information (SCI), which may for example indicate resource allocation and scheduling information for a data transmission on PSSCH. During the sensing procedure, the first terminal device 110 may obtain a knowledge of resource reservation by other nearby UE(s) by monitoring and decoding SCI. The terminal device may then select at least one available resource from the resource pool based at least on the knowledge.

SCI may include a single stage. Alternatively, the SCI may include more than one stages, that is, a first stage SCI (e.g., 1^{st} stage SCI) and a second stage SCI (e.g., 2^{nd} stage SCI), where the 1^{st} stage SCI includes information for enabling sensing operations and information for determining resource allocation of PSSCH and decoding the 2^{nd} stage SCI. By way of example, SCI format 1-A may include one or more of the following fields:
- Priority: 3 bits (same format/meaning as ProSe Per-Packet Priority (PPPP) in LTE PC5)
- Frequency resource assignment: bit size depends on the maximum number (sl-MaxNumPerReserve) of reserved PSCCH/PSSCH resources indicated by SCI and number of sub-channels of the resource pool
- Time resource assignment: 5 or 9 bits depending on sl-MaxNumPerReserve - which can indicate slot offset up to 31
- Resource reservation period: bit size depends on supported number of resource reservation periods
- Demodulation reference signal (DMRS) pattern: bit size depends on the number of DMRS time patterns configured
- 2^{nd}-stage SCI format: 2 bits (SCI format 2-A or 2-B, reserved)
- Beta-offset indicator: 2 bits
- Number of DMRS port: 1 bit (antenna port p=1000, or p=1000/1001)
- Modulation and coding scheme: 5 bits
- Additional MCS table indicator: 0, 1, or 2 bits (depending on whether/number of additional MCS tables configured)
- Physical Sidelink Feedback Channel (PSFCH) overhead indicator: 1 bit (for PSFCH period = 2 or 4) or 0 bit (otherwise).
- Reserved: sl-NumReservedBits reserved bits, set to zeros.

In the example shown in FIG. 1, the first terminal device 110 and the second terminal device 120 may be configured with a same resource pool. In a positioning scenario, the first terminal device 110 may act as an anchor UE (hereinafter also referred to as the anchor UE 110), and the second terminal device 120 may act as a target UE (hereinafter also referred to as the target UE 120). However, it should be understood that the roles of the first terminal device 110 and the second terminal device 120 are exchangeable. That is, in some cases, the first terminal device 110 may act as a target UE, while the second terminal device 120 may act as an anchor UE.

To position a location of the second terminal device 120, the anchor UE 110 may be involved in a SL positioning session with the target UE 120. In particular, the anchor UE 110 may transmit one or more SL reference signal (e.g., SL-PRS) to the target UE 120.

In some example embodiments, resource allocation of the SL-PRS may be implemented at sub-slot level. That is, instead of an entire slot, only part of the slot is used for SL-PRS transmission, which may be also referred to as a sub-slot or a mini-slot. In this case, multiple SL-PRSs may be transmitted within one slot. In the context of the embodiments, the second terminal device 120 may be a UE under Rel- 18 or a non-legacy UE, which supports the sub-slot resource structure, and thus it can understand resource allocation at sub-slot level. It should be understood that in the communication network 100, there may be also other UEs (e.g., legacy UEs) not supporting sub-slot resource structure or not understanding the sub-slot resource allocation.

As described above, SCI contains some bits related to DMRS. A configuration of one or more PSSCH DMRS patterns in time domain per a resource pool is supported with the used pattern indicated by 1^{st} stage SCI. In some example embodiments, SCI may indicate at least one resource for SL reference signal transmission(s). As one of the implementations, the bits related to DMRS may be reused for indicating the sub-slot time domain allocation of the SL-PRS.

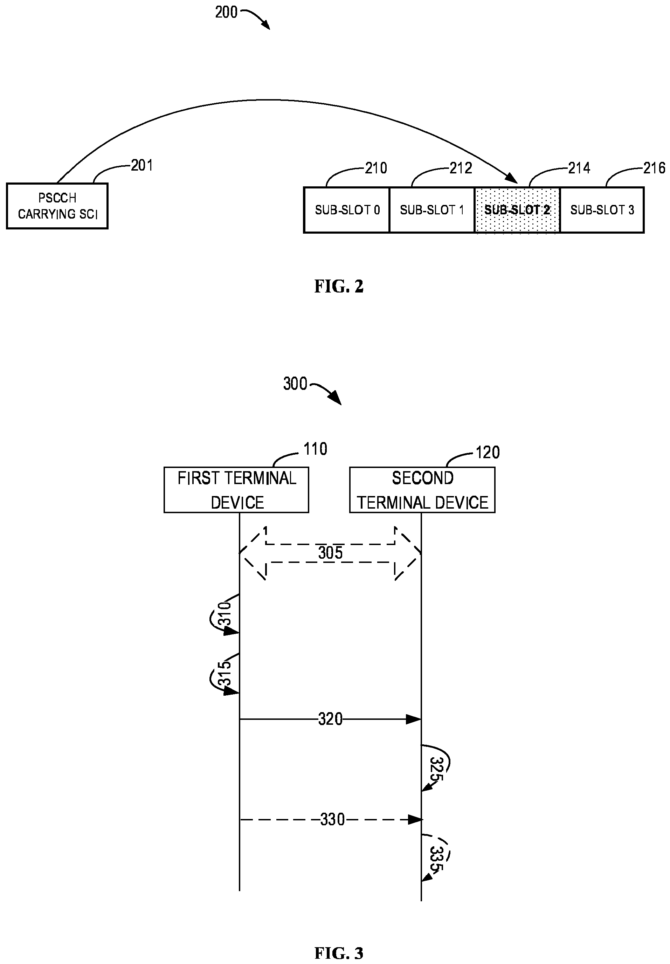

FIG. 2 illustrates an example sub-slot resource allocation scheme 200 according to some example embodiments of the present disclosure. As shown in FIG. 2, the slot 202 comprises four sub-slots indexed with "sub-slot 0", "sub-slot 1", "sub-slot 2" and "sub-slot 3". By way of example, SCI carried over PSCCH 201 indicates that the third sub-slot in the slot 202 (i.e., indexed with "sub-slot 2") is selected by the anchor UE 110 for the SL-PRS transmission. In this way, the SCI is used for reservation of the third sub-slot. The target UE 120 monitors PSCCH, and if the SCI is successfully decoded over PSCCH, the target UE 120 may be aware of no DMRS associated with the SL-PRS. In this case, the target UE 120 may understand which sub-slot will be used for the SL PRS transmission based on the bits related to DMRS in SCI. As one of the implementations, the bits related to DMRS may be used to indicate an index or number of the sub-slot selected for SL-PRS transmission, that is, "sub-slot 2". Furthermore, all the other UEs that have successfully decoded the SCI may consider the sub-slots not indicated by the SCI as still open resources, that is, not reserved for transmission of the SL reference signal by the anchor UE 110. Such unreserved sub-slots may be available for data transmissions.

In some example embodiments, the anchor UE 110 may configure an on/off indicator in SCI for indicating whether the bits reserved for DMRS pattern is reused for indicating SL-PRS transmission. For example, this may be implemented via a higher layer signaling, such as RRC. In addition, the on/off indicator may be indicated by SCI format 1-A by using a reserved bit.

In addition to indicating the sub-slot selected for SL-PRS transmission, in some example embodiments, the SCI may indicate additional information or configuration, which will be described in detail below.

Since legacy UEs do not support the sub-slot resource allocation and reservation, it may understand that a transmission will occur in the entire slot as indicated by part of the SCI, and consider those resources as reserved. Moreover, the legacy UEs may assume some DMRS configurations based on the bits reserved for DMRS pattern even if the bits are used by other UEs to understand the sub-slot structure. As the anchor UE 110 may not transmit any DMRS, this is unharmful. The legacy UEs may anyways not receive the following SL-PRS.

It is to be understood that the number of devices and their connections shown in FIG. 1 are only for the purpose of illustration without suggesting any limitation. The communication environment 100 may include any suitable number of devices configured to implementing example embodiments of the present disclosure. Although not shown, it would be appreciated that one or more additional devices may be located in the communication environment 100. It is noted that although illustrated as terminal devices, the anchor UE and the target UE may be devices other than terminal devices.

In the following, for the purpose of illustration, some example embodiments are described with the first terminal device 110 operating as the anchor UE and the second terminal device 120 operating as the target UE. However, in some example embodiments, operations described in connection with the first terminal device 110 may be implemented at the second terminal device 120 or other device, and operations described in connection with the second terminal device 120 may be implemented at the first terminal device 110 or other device. The present disclosure is not limited in this regard.

Communications in the communication environment 100 may be implemented according to any proper communication protocol(s), comprising, but not limited to, cellular communication protocols of the first generation (1G), the second generation (2G), the third generation (3G), the fourth generation (4G), the fifth generation (5G), the sixth generation (6G), and the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

Example embodiments of the present disclosure will be described in detail below with reference to the accompanying drawings.

Reference is now made to FIG. 3, which illustrates an example signaling diagram 300 of a SL positioning procedure according to some example embodiments of the present disclosure. As shown in FIG. 3, the process 300 involves the first terminal device 110 and the second terminal device 120. For the purpose of discussion, reference is made to FIG. 1 and FIG. 2 to describe the signaling chart 300.

In the process 300, the first terminal device 110 may establish 305 a SL positioning session with the second terminal device 120, where the first terminal device 110 acts as the anchor UE, while the second terminal device 120 acts as the target UE.

The first terminal device 110 may transmit SL reference signals that may be used for positioning. In the following descriptions, SL-PRS is given as an example of various SL reference signals. However, the process 300 is also applicable to any other SL reference signals. The present disclosure is not limited in this regard.

In some example embodiments, the first terminal device 110 may determine to use a sub-slot structure for SL-PRS transmission. In this case, the SL-PRS is to be transmitted on only part of a slot. For example, as shown in FIG. 2, the sub-slot structure may comprise a plurality of sub-slots with respective indexes. Accordingly, the first terminal device 110 selects 310 from a resource pool a part of a slot in time domain for communication of SL-PRS for the SL-PRS transmission.

Specifically, the first terminal device 110 may indicate a SL-PRS resource selection at sub-slot level in SCI. To this end, the first terminal device 315 generate SCI comprising an indication of the part of the slot. By way of example, the indication may indicate at least one index or number of at least one sub-slot selected by the first terminal device 110.

In some example embodiments, at least one bit reserved for DMRS pattern in the SCI (which may be also referred to as DMRS bits hereinafter) may be used for indicating the SL-PRS resource selection at sub-slot level. By way of example, the first terminal device 110 may set at least one DMRS bits in the SCI to indicate the sub-slot number or index in which the SL PRS is to be transmitted.

For example, if a 4 sub-slot per slot SL PRS structure is supported or configured, that is, each slot includes four sub slots, and the SL-PRS is to be transmit in the 3rd sub-slot, then the first terminal device 110 may set the DMRS bits in the SCI to be equal to 2.

In some example embodiments, the number of DMRS bits may be more than needed, in other words, the number of sub-slots the DMRS bits could represent is larger than the number of sub-slots. In this case, either the least significant bits or most significant bits may be used to indicate the sub-slot for SL-PRS communication. For example, the number of DMRS bits to be used for indicating the sub-slot may be a fixed number, or alternatively configured as part of the SL PRS configuration, for example, via a higher layer (e.g., RRC) signaling.

Additionally, in some example embodiments, the first terminal device 110 may be further configured with an on/off indicator, for example, via higher layer signaling such as RRC. If this indicator is set to a first value, e.g., "on", the first terminal device 110 may determine that the field used to indicate DMRS pattern is re-used to indicate SL-PRS transmission. otherwise, if this indicator is set to a second value, e.g., "off', the first terminal device 110 may determine that the field used to indicate DMRS pattern is not used to indicate SL-PRS transmission. In some cases, the on/off indicator may be indicated by using the reserved bit in SCI format 1-A. However, the present disclosure is not limited in this regard.

Additionally, or alternatively, in some example embodiments, Hybrid Automatic Repeat Request (HARQ) process bits in the 2^{nd} stage SCI may also be reused for indication SL-PRS configuration information. For example, these bits may be set to indicate at least one of the following: a comb offset of the SL-PRS, the beam information (i.e., beam used by the UE for SL-PRS transmission), spatial relation information, power information, or repetition factor, etc.. The spatial relation information configuration may include a reference signal index such as a SSB ID, a SL CSI-RS ID, or a SL PRS ID, and this indicates the UE to transmit SL PRS in a beam direction when the UE used for the reference signal index in the spatial relation configuration.

Additionally, or alternatively, in some example embodiments, one of the DMRS bits, for example, the bit used to indicate "number of DMRS port", may be reused to indicate the number of SL PRS ports, if SL-PRS is not configured with a single port. By way of example, if the indicator is set to "On", e.g., in the RRC Configuration, the first terminal device 110 could understand that the field in SCI used for indicating DMRS port number now is reused for indicating SL-PRS port number indication.

The first termina device 320 transmits the SCI to the second terminal device 120. Anchor UE then transmits SL PRS according to the sub-slot time domain structure it has indicated and take any other collisions into account with the sub-slot structure

In some example embodiments, the second terminal device 120 may monitor PSCCH and decode the SCI. Accordingly, the second terminal device 120 determines 325 based on the indication, a potential communication of SL-PRS on the part of the slot. For example, in some case, the second terminal device 120 may further determine potential conflicts based on the sub-slot resource allocation.

As previously mentioned, the target UEs supporting the sub-slot resource allocation (e.g., UEs according to Rel-18) may decode the SCI and understand that this is intended for the SL-PRS transmission (e.g., as indicated elsewhere in SCI). Accordingly, these target UEs are able to know that no DMRS may be associated with the SL-PRS and instead decode those DMRS bits to understand which sub-slot is to be used for the SL PRS transmission. Furthermore, for the sub-slots not indicated in the SCI, these UEs may then consider as being not reserved for transmission of the SL reference signal by the anchor UE, and thus may be available for data or other transmissions (e.g., other SL-PRS transmissions).

In some example embodiments, the first terminal device 110 may transmit 330 the SL-PRS on the part of the slot as indicated in SCI. Accordingly, the second terminal device 120 may receive the SL-PRS on the part of the slot and perform 335 measurements for positioning.

There may also be other UEs not supporting the sub-slot structure in the communication network 100. Those UEs may understand that a transmission is to occur in the slot as indicated by part of the SCI, and consider those resources as reserved. In some cases, those UEs may assume some DMRS configuration based on the bits, but as the anchor UE may not transmit any DMRS, this will not be harmful. The legacy UEs may anyways not receive the SL PRS.

According to the example embodiments, there is provided enhancements on SL positioning. With the proposed solution, resource allocation at sub-slot level is enabled for SL-PRS communication. In particular, the SCI is configured for indicating at least one sub-slot in which the SL-PRS is to be transmitted and selectively additional information about the SL-PRS. In this way, the SL positioning sensing can be improved in terms of resource allocation. In addition, the resource utilization and efficiency can be improved in SL positioning. The proposed solution is also backwards compatible with legacy UEs.

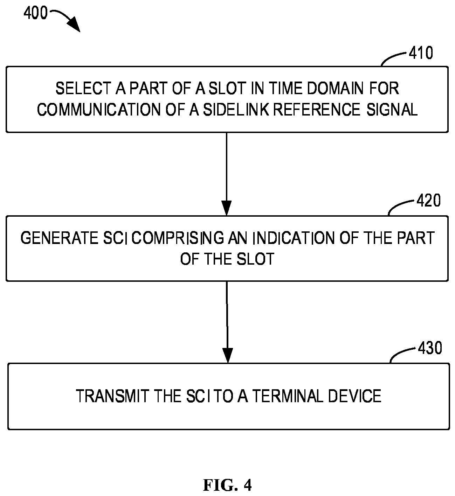

FIG. 4 illustrates a flowchart of an example method 400 implemented at a terminal device in accordance with some example embodiments of the present disclosure. The method 400 may be implemented at the first terminal device 110 as shown in FIG. 1. For the purpose of discussion, the method 400 will be described from the perspective of the first terminal device 110 in FIG. 1.

At block 410, the first terminal device 110 selects, from a resource pool, a part of a slot in time domain for communication of a SL reference signal. For example, the SL reference signal may be a SL-PRS. The resource pool may a dedicated or shared resource pool.

At block 420, the first terminal device 110 generates SL control information, SCI, comprising an indication of the part of the slot.

In some example embodiments, the method 400 may further comprise: determining a sub-slot structure of the slot to be used for communication of the SL reference signal. The sub-slot structure may include a plurality of sub-slots, which may be also referred to as mini-slots.

In some example embodiments, the part of the slot may include at least one sub-slot, and the indication may indicate at least one index of the at least one sub-slot.

In some example embodiments, the indication may be indicated by at least one of bits reserved for DMRS pattern in the SCI. Additionally, the number of the at least one bit may be associated with the number of a plurality of sub-slots in the slot.

In some example embodiments, the number of the bits reserved for DMRS pattern may be larger than the number of a plurality of sub-slots in the slot. The method 400 may further comprise: setting a first number of least significant bits or a second number of most significant bits for indicating the part of the slot. The first number or the second number may be predetermined or preconfigured.

In some example embodiments, the SCI may further comprise an indicator indicating whether the bits reserved for DMRS pattern is set for indicating the part of the slot.

In some example embodiments, generating the SCI may comprise: generating a second stage of the SCI comprising configuration information of the SL reference signal. For example, the configuration information may comprise at least one of the following: a comb offset, beam information, spatial relation information, power information, or a repetition factor associated with the SL reference signal.

In some example embodiments, the configuration information may be indicated by at least one of bits reserved for HARQ process in the second stage of SCI.

In some example embodiments, the SCI may further comprise an indication of the number of SL reference signal port indicated by at least one bit for the number of DMRS port.

At block 430, the first terminal device 110 transmit the SCI to the second terminal device 120.

In some example embodiments, the method 400 may further comprise: transmitting, to the second terminal device 120, at least one SL reference signal on the part of the slot.

In some example embodiments, the first terminal device 110 may comprise an anchor terminal device, and the second terminal device 120 may comprise a target device to be positioned.

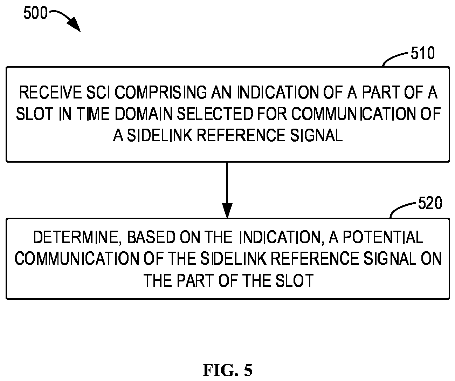

FIG. 5 illustrates a flowchart of an example method 500 implemented at a terminal device in accordance with some example embodiments of the present disclosure. The method 500 may be implemented at the second terminal device 120 as shown in FIG. 1. For the purpose of discussion, the method 500 will be described from the perspective of the first terminal device 110 in FIG. 1.

At block 510, the second terminal device 120 receives, from the first terminal device 110, SCI comprising an indication of a part of a slot in time domain selected for communication of a SL reference signal.

At block 520, the second terminal device 120 determines, based on the indication, a potential communication of the SL reference signal on the part of the slot.

In some example embodiments, the part of the slot may comprise at least one sub-slot and the indication indicates at least one index of the at least one sub-slot.

In some example embodiments, the indication may be indicated by at least one of bits reserved for DMRS pattern in the SCI.

In some example embodiments, the number of the at least one bit may be associated with the number of a plurality of sub-slots in the slot.

In some example embodiments, the number of the bits reserved for DMRS pattern may be larger than the number of a plurality of sub-slots in the slot. The method 500 may further comprise: determine the part of the slot based on a first number of least significant bits or a second number of most significant bits of the bits for DMRS pattern. The first number or the second number may be predetermined or preconfigured.

In some example embodiments, the SCI may further comprise an indicator indicating whether the bits reserved for DMRS pattern is set for indicating the part of the slot.

In some example embodiments, the method 500 may further comprise: determining a value of the indicator; based on determining that the indication is set to a first value, determining that the bits reserved for DMRS pattern are used for indicating the communication of the SL reference signal; and determining the part of the slot based on the at least one of the bits reserved for DMRS pattern; or based on determining that the indication is set to a second value, determining that the bits reserved for DMRS pattern in the SCI are not used for indicating the communication of the SL reference signal.

In some example embodiments, the method 500 may further comprise: determining, based on the indication, that a rest part of the slot is not reserved for transmission of the SL reference signal by the first terminal device 110.

In some example embodiments, the method 500 may further comprise: determining configuration information of the SL reference signal, from a second stage of the SCI. For example, the configuration information may comprise at least one of the following: a comb offset, beam information, spatial relation information, power information, or a repetition factor associated with the SL reference signal.

In some example embodiments, the configuration information may be indicated by at least one of bits reserved for HARQ process in the second stage of SCI.

In some example embodiments, the SCI may further comprise an indication of the number of SL reference signal port indicated by at least one bit for the number of DMRS port.

In some example embodiments, the method 500 may further comprise: determine, based at least on the indication, whether a potential conflict occurs on the part of the slot; and based on determining that no conflict occurs on the part of the slot, receive at least one SL reference signal on the part of the slot.

In some example embodiments, the second terminal device 120 may comprise a target terminal device to be positioned, and the first terminal device 110 may comprise an anchor terminal device.

In some example embodiments, a first apparatus capable of performing any of the method 400 (for example, the first terminal device 110 in FIG. 1 may comprise means for performing the respective operations of the method 400. The means may be implemented in any suitable form. For example, the means may be implemented in a circuitry or software module. The first apparatus may be implemented as or included in the first terminal device 110 in FIG. 1.

In some example embodiments, the first apparatus comprises: means for selecting, from a resource pool, a part of a slot in time domain for communication of a sidelink reference signal; means for generating SCI comprising an indication of the part of the slot; and means for transmitting the SCI to a second apparatus.

In some example embodiments, the first apparatus further comprises: means for determining a sub-slot structure of the slot to be used for communication of the sidelink reference signal, the sub-slot structure comprising a plurality of sub-slots.

In some example embodiments, the part of the slot comprises at least one sub-slot, and the indication indicates at least one index of the at least one sub-slot.

In some example embodiments, the indication is indicated by at least one of bits reserved for demodulation reference signal, DMRS, pattern in the SCI.

In some example embodiments, the number of the at least one bit is associated with the number of a plurality of sub-slots in the slot.

In some example embodiments, the number of the bits reserved for DMRS pattern is larger than the number of a plurality of sub-slots in the slot, and the means for generating the SCI comprises: means for setting a first number of least significant bits or a second number of most significant bits for indicating the part of the slot, the first number or the second number being predetermined or preconfigured.

In some example embodiments, the SCI further comprises an indicator indicating whether the bits reserved for DMRS pattern is set for indicating the part of the slot.

In some example embodiments, the means for generating the SCI comprises: means for generating a second stage of the SCI comprising configuration information of the sidelink reference signal, the configuration information comprising at least one of the following: a comb offset, beam information, spatial relation information, power information, or a repetition factor associated with the sidelink reference signal.

In some example embodiments, the configuration information is indicated by at least one of bits reserved for Hybrid Automatic Repeat Request, HARQ, process in the second stage of SCI.

In some example embodiments, the SCI further comprises an indication of the number of sidelink reference signal port indicated by at least one bit for the number of DMRS port.

In some example embodiments, the first apparatus further comprises: means for transmitting, to the second apparatus, at least one sidelink reference signal on the part of the slot.

In some example embodiments, the first apparatus comprises an anchor terminal device, and the second apparatus comprises a target device to be positioned.

In some example embodiments, a second apparatus capable of performing any of the method 500 (for example, the second terminal device 120 in FIG. 1) may comprise means for performing the respective operations of the method 500. The means may be implemented in any suitable form. For example, the means may be implemented in a circuitry or software module. The second apparatus may be implemented as or included in the second terminal device 120 in FIG. 1.

In some example embodiments, the second apparatus comprises: means for receiving, from a first apparatus, SCI comprising an indication of a part of a slot in time domain selected for communication of a sidelink reference signal; and means for determining, based on the indication, a potential communication of the sidelink reference signal on the part of the slot.

In some example embodiments, the part of the slot comprises at least one sub-slot and the indication indicates at least one index of the at least one sub-slot.

In some example embodiments, the indication is indicated by at least one of bits reserved for DMRS pattern in the SCI.

In some example embodiments, the number of the at least one bit is associated with the number of a plurality of sub-slots in the slot.

In some example embodiments, the number of the bits reserved for DMRS pattern is larger than the number of a plurality of sub-slots in the slot, and the second apparatus further comprises: means for determining the part of the slot based on a first number of least significant bits or a second number of most significant bits of the bits for DMRS pattern, the first number or the second number being predetermined or preconfigured.

In some example embodiments, the SCI further comprises an indicator indicating whether the bits reserved for DMRS pattern is set for indicating the part of the slot.

In some example embodiments, the second apparatus further comprises: means for determining a value of the indicator; means for based on determining that the indication is set to a first value, determining that the bits reserved for DMRS pattern are used for indicating the communication of the sidelink reference signal; and determining the part of the slot based on the at least one of the bits reserved for DMRS pattern; or means for based on determining that the indication is set to a second value, determining that the bits reserved for DMRS pattern in the SCI are not used for indicating the communication of the sidelink reference signal.

In some example embodiments, the second apparatus further comprises: means for determining, based on the indication, that a rest part of the slot is not reserved for transmission of the sidelink reference signal by the first apparatus.

In some example embodiments, the second apparatus further comprises: means for determining configuration information of the sidelink reference signal, from a second stage of the SCI, the configuration information comprising at least one of the following: a comb offset, beam information, spatial relation information, power information, or a repetition factor associated with the sidelink reference signal.

In some example embodiments, the configuration information is indicated by at least one of bits reserved for Hybrid Automatic Repeat Request, HARQ, process in the second stage of SCI.

In some example embodiments, the SCI further comprises an indication of the number of sidelink reference signal port indicated by at least one bit for the number of DMRS port.

In some example embodiments, the second apparatus further comprises: means for determining, based at least on the indication, whether a potential conflict occurs on the part of the slot; and means for based on determining that no conflict occurs on the part of the slot, receive at least one sidelink reference signal on the part of the slot.

In some example embodiments, the second apparatus comprises a target terminal device to be positioned, and the first apparatus comprises an anchor terminal device.

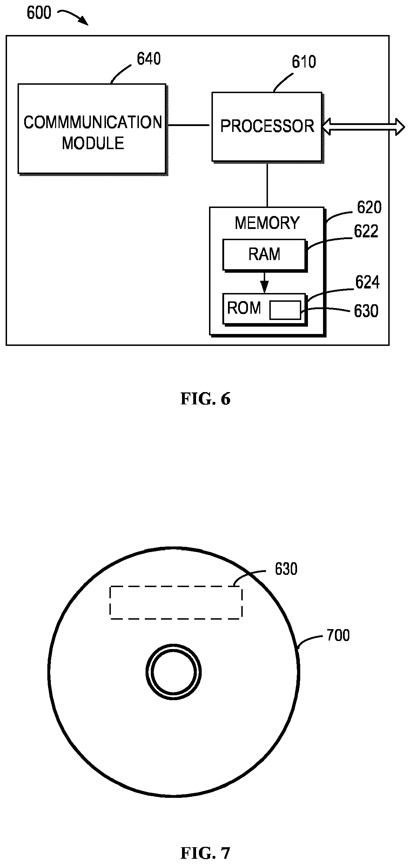

FIG. 6 is a simplified block diagram of a device 600 that is suitable for implementing example embodiments of the present disclosure. The device 600 may be provided to implement a communication device, for example, the first device 110 or the second device 120 as shown in FIG. 1. As shown, the device 600 includes one or more processors 610, one or more memories 620 coupled to the processor 610, and one or more communication modules 640 coupled to the processor 610.

The communication module 640 is for bidirectional communications. The communication module 640 has one or more communication interfaces to facilitate communication with one or more other modules or devices. The communication interfaces may represent any interface that is necessary for communication with other network elements. In some example embodiments, the communication module 640 may include at least one antenna.

The processor 610 may be of any type suitable to the local technical network and may include one or more of the following: general purpose computers, special purpose computers, microprocessors, digital signal processors (DSPs) and processors based on multicore processor architecture, as non-limiting examples. The device 600 may have multiple processors, such as an application specific integrated circuit chip that is slaved in time to a clock which synchronizes the main processor.

The memory 620 may include one or more non-volatile memories and one or more volatile memories. Examples of the non-volatile memories include, but are not limited to, a Read Only Memory (ROM) 624, an electrically programmable read only memory (EPROM), a flash memory, a hard disk, a compact disc (CD), a digital video disk (DVD), an optical disk, a laser disk, and other magnetic storage and/or optical storage. Examples of the volatile memories include, but are not limited to, a random access memory (RAM) 622 and other volatile memories that will not last in the power-down duration.

A computer program 630 includes computer executable instructions that are executed by the associated processor 610. The instructions of the program 630 may include instructions for performing operations/acts of some example embodiments of the present disclosure. The program 630 may be stored in the memory, e.g., the ROM 624. The processor 610 may perform any suitable actions and processing by loading the program 630 into the RAM 622.

The example embodiments of the present disclosure may be implemented by means of the program 630 so that the device 600 may perform any process of the disclosure as discussed with reference to FIG. 3 to FIG. 5. The example embodiments of the present disclosure may also be implemented by hardware or by a combination of software and hardware.

In some example embodiments, the program 630 may be tangibly contained in a computer readable medium which may be included in the device 600 (such as in the memory 620) or other storage devices that are accessible by the device 600. The device 600 may load the program 630 from the computer readable medium to the RAM 622 for execution. In some example embodiments, the computer readable medium may include any types of non-transitory storage medium, such as ROM, EPROM, a flash memory, a hard disk, CD, DVD, and the like. The term "non-transitory," as used herein, is a limitation of the medium itself (i.e., tangible, not a signal) as opposed to a limitation on data storage persistency (e.g., RAM vs. ROM).

FIG. 7 shows an example of the computer readable medium 700 which may be in form of CD, DVD or other optical storage disk. The computer readable medium 700 has the program 630 stored thereon.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

Some example embodiments of the present disclosure also provide at least one computer program product tangibly stored on a computer readable medium, such as a non-transitory computer readable medium. The computer program product includes computer-executable instructions, such as those included in program modules, being executed in a device on a target physical or virtual processor, to carry out any of the methods as described above. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. The program code may be provided to a processor or controller of a general purpose computer, special purpose computer, or other programmable data processing apparatus, such that the program code, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Unless explicitly stated, certain features that are described in the context of separate embodiments may also be implemented in combination in a single embodiment. Conversely, unless explicitly stated, various features that are described in the context of a single embodiment may also be implemented in a plurality of embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

### PARTIAL GLOSSARY

- UE: User Equipment
- 5G: Fifth Generation
- RAN: Radio Access Network
- LTE: Long Term Evolution
- LTE-A: LTE-Advanced
- WCDMA: Wideband Code Division Multiple Access
- HSPA: High-Speed Packet Access
- NB-IoT: Narrow Band Internet of Things
- NR: New Radio
- BS: Base Station
- AP: Access Point
- eNodeB: Evolved NodeB
- gNB/NR NB: Next Generation NodeB
- RRU: Remote Radio Unit
- RH: Radio Header
- RRH: Remote Radio Head
- CU: Centralized Unit
- DU: Distributed Unit
- SS: Subscriber Station
- MS: Mobile Station
- AT: Access Terminal
- VoIP: Voice over IP
- PDA: Personal Digital Assistant
- LEE: Laptop-embedded Equipment
- LME: Laptop-mounted Equipment
- USB: Universal Serial Bus
- CPE: Customer-Premises Equipment
- HMD: Head-mounted Display
- MT: Mobile Termination
- IAB: Integrated Access and Backhaul
- DL: Downlink
- UL: Uplink
- Tx: Transmitting
- Rx: Receiving
- ID: Identity/Identifier
- IEEE: Institute for Electrical and Electronics Engineers
- CDMA: Code Division Multiple Access
- FDMA: Frequency Division Multiple Access
- TDMA: Time Division Multiple Access
- FDD: Frequency Division Duplex
- TDD: Time Division Duplex
- MIMO: Multiple-Input Multiple-Output
- OFDM: Orthogonal Frequency Division Multiple
- DFT-s-OFDM: Discrete Fourier Transform spread OFDM
- IoT: Internet of everything
- eMTC: enhanced Machine-Type Communication
- URLLC: Ultra Reliable Low Latency Communications
- eMBB: Enhanced Mobile Broadband
- mMTC: Massive Machine Type Communications
- RRC: Radio Resource Control
- SL: Sidelink
- SCI: Sidelink Control Information
- DMRS: Demodulation Reference Signal
- PSCCH: Physical Sidelink Control Channel
- SL PRS: Sidelink Positioning Reference Signal
- RSRP: Reference Signal Receiving Power
- RRM: Radio Resource Management
- RLM: Radio Link Monitoring
- TDOA: Time Difference of Arrival
- T-UE: Target UE

## Claims

1. A first apparatus, comprising:
at least one processor; and
at least one memory storing instructions that, when executed by the at least one processor, cause the first apparatus at least to:
select, from a resource pool, a part of a slot in time domain for communication of a sidelink positioning reference signal;
generate sidelink control information, SCI, comprising an indication of the part of the slot, wherein the indication is indicated by at least one bit reserved for demodulation reference signal, DMRS, pattern in the SCI; and
transmit the SCI to a terminal device.

2. The first apparatus of claim 1, wherein the first apparatus is further caused to:
determine a sub-slot structure of the slot to be used for communication of the sidelink positioning reference signal, the sub-slot structure comprising a plurality of sub-slots.

3. The first apparatus of claim 1 or claim 2, wherein the part of the slot comprises at least one sub-slot, and the indication indicates at least one index of the at least one sub-slot.

4. The first apparatus of any of claims 1 to 3, wherein the number of the at least one bit is associated with the number of a plurality of sub-slots in the slot.

5. The first apparatus of any of claims 1 to 4, wherein the number of the bits reserved for DMRS pattern is larger than the number of a plurality of sub-slots in the slot, and
wherein the first apparatus is caused to generate the SCI by:
setting a first number of least significant bits or a second number of most significant bits for indicating the part of the slot, the first number or the second number being predetermined or preconfigured.

6. The first apparatus of any of claims 1 to 5, wherein the SCI further comprises an indicator indicating whether the bits reserved for DMRS pattern is set for indicating the part of the slot.

7. A second apparatus, comprising:
at least one processor; and
at least one memory storing instructions that, when executed by the at least one processor, cause the second apparatus at least to perform:
receive, from a terminal device, sidelink control information, SCI, comprising an indication of a part of a slot in time domain selected for communication of a sidelink positioning reference signal, wherein the indication is indicated by at least one bit reserved for demodulation reference signal, DMRS, pattern in the SCI; and
determine, based on the indication, a potential communication of the sidelink positioning reference signal on the part of the slot.

8. The second apparatus of claim 7, wherein the part of the slot comprises at least one sub-slot and the indication indicates at least one index of the at least one sub-slot.

9. The second apparatus of claim 7 or claim 8, wherein the number of the at least one bit is associated with the number of a plurality of sub-slots in the slot.

10. The second apparatus of any of claims 7 to 9, wherein the number of the bits reserved for DMRS pattern is larger than the number of a plurality of sub-slots in the slot, and
wherein the second apparatus is further caused to:
determine the part of the slot based on a first number of least significant bits or a second number of most significant bits of the bits reserved for DMRS pattern, the first number or the second number being predetermined or preconfigured.

11. The second apparatus of any of claims 7 to 10, wherein the SCI further comprises an indicator indicating whether the bits reserved for DMRS pattern is set for indicating the part of the slot.

12. The second apparatus of claim 11, wherein the second apparatus is further caused to:
determine a value of the indicator;
based on determining that the indication is set to a first value,
determine that the bits reserved for DMRS pattern are used for indicating the communication of the sidelink positioning reference signal; and
determine the part of the slot based on the at least one of the bits reserved for DMRS pattern; or
based on determining that the indication is set to a second value, determine that the bits reserved for DMRS pattern in the SCI are not used for indicating the communication of the sidelink positioning reference signal.

13. A method comprising:
selecting, at a first terminal device and from a resource pool, a part of a slot in time domain for communication of a sidelink positioning reference signal;
generating sidelink control information, SCI, comprising an indication of the part of the slot, wherein the indication is indicated by at least one bit reserved for demodulation reference signal, DMRS, pattern in the SCI; and
transmitting the SCI to a second terminal device.

14. A method comprising:
receiving, from a first terminal device, sidelink control information, SCI, comprising an indication of a part of a slot in time domain selected for communication of a sidelink positioning reference signal, wherein the indication is indicated by at least one bit reserved for demodulation reference signal, DMRS, pattern in the SCI; and
determining, based on the indication, a potential communication of the sidelink positioning reference signal on the part of the slot.
